# EUROPÄISCHE PATENTSCHRIFT

(11) **EP 1 785 304 B1**
(45) Veröffentlichungstag und Bekanntmachung des Hinweises auf die Patenterteilung: **07.01.2009**
(21) Anmeldenummer: 06023290.7
(22) Anmeldetag: 09.11.2006
(51) Int. Cl.: B60J 7/20

(54) **Fahrzeug mit einem zwischen einer Schliessposition und einer Ablageposition verstellbaren Fahrzeugdach**
Vehicle with a vehicle roof adjustable between a closed position and a stored position
Véhicule avec un toit ajustable entre une position pliée et une position fermée

(30) Priorität: 15.11.2005 DE 102005054857
(43) Veröffentlichungstag der Anmeldung: 16.05.2007
(73) Patentinhaber: Magna Car Top Systems GmbH, 74321 Bietigheim-Bissingen (DE)
(72) Erfinder: Schumacher, Thorsten, Dipl.-Ing., 25495 Kummerfeld (DE); Rau, Stefan, Dipl.-Ing., 76135 Karlsruhe (DE)

(56) Entgegenhaltungen:
- EP-A2- 1 199 202
- DE-A1- 10 213 548
- DE-A1- 10 216 417
- DE-A1- 10 337 473
- DE-B3- 10 331 392
- DE-B3- 10 340 017
- DE-B3- 10 353 515
- US-A1- 2004 155 480

## Beschreibung

Die Erfindung bezieht sich auf ein Fahrzeug mit einem zwischen einer Schließposition und einer Ablageposition verstellbaren Fahrzeugdach nach dem Oberbegriff des Anspruches 1.

In der Druckschrift DE 102 16 417 A1 wird ein Cabriolet-Fahrzeug mit einem abklappbaren Fahrzeugdach beschrieben, das in Ablageposition in einem heckseitigen Ablageraum verstaut ist, welcher Teil des Kofferraumes ist und von einem Heckdeckel überdeckt ist. Der Heckdeckel ist über eine Mehrgelenkkinematik verstellbar an einen Rohrrahmen gekoppelt, der gelenkig mit der Fahrzeugkarosserie verbunden ist, so dass zum einen der Rohrrahmen einschließlich Heckdeckel um die karosserieseitige Drehachse des Rohrrahmens aufgeschwenkt und zum andern bei einer Betätigung der Mehrgelenkkinematik der Heckdeckel eine Relativbewegung gegenüber dem Rohrrahmen ausführen kann. Für die Ablage des Fahrzeugdaches und das Öffnen des Kofferraumes werden unterschiedliche Bewegungen ausgeführt: Bei der Ablage des Fahrzeugdaches verbleibt der Rohrrahmen im Ablageraum und es wird nur die Mehrgelenkkinematik zum Anheben des Heckdeckels in der Weise betätigt, dass die Heckdeckelvorderkante angehoben wird, so dass ein Durchtritt für die Überführungsbewegung des Fahrzeugdaches in den Ablageraum hinein freigegeben wird. Zum Beladen des Kofferraumes wird dagegen der Rohrrahmen einschließlich Heckdeckel um die karosserieseitige Drehachse aufgeschwenkt, so dass die Hinterkante des Heckdeckels angehoben wird und der Kofferraum zugänglich ist.

Um das Beladen des Kofferraumes zu erleichtern, kann das im Ablageraum verstaute Fahrzeugdach in eine so genannte angehobene Ladehilfsposition verbracht werden. Hierfür wird bei geöffnetem Heckdeckel und angehobenem Rohrrahmen die Dachkinematik zur Anhebung der Dachteile bis in eine Position unmittelbar unterhalb des aufgeschwenkten Heckdeckels betätigt. Der unterhalb der Dachteile befindliche Raum ist hierdurch leichter zugänglich.

Der aufgeschwenkte Rohrrahmen einschließlich dem am Rohrrahmen gehaltenen Heckdeckel stellen eine relativ große Masse dar, die verhältnismäßig leicht in Schwingungen geraten kann. Um eine unzulässig hohe Belastung der Lager am Rohrrahmen zu verhindern, muss darauf geachtet werden, dass die Schwingungen ein zulässiges Maß nicht überschreiten.

Des Weiteren ist darauf zu achten, dass die Proportionen des Rohrrahmens und die Umrisse des Fahrzeugdaches aufeinander abgestimmt sind. Bei der DE 102 16 417 A1 verbleibt der Rohrrahmen bei der Ablagebewegung des Fahrzeugdaches im Ablageraum und das Fahrzeugdach wird durch die vom Rohrrahmen eingefasste und begrenzte Öffnung abgelegt. Dies erfordert einen verhältnismäßig groß dimensionierten Rohrrahmen.

Die DE 102 13 548 A1 zeigt ein Fahrzeug mit einem verstellbaren Fahrzeugdach, das in Ablageposition in einem Verdeckablageraum zu verstellen ist, welcher von einer zweiteiligen Verdeckklappe überdeckt wird. Die Verdeckklappe umfasst ein Hutablageteil 32 und einen Kofferraumdeckel, wobei das Hutablageteil an einem Trägergestell angeordnet ist, an dem der Kofferraumdeckel über ein Viergelenk bewegbar ist, so dass das Trägergestell zugleich Träger des Kofferraumdeckels ist. Das Trägergestell ist über zwei Lenker an einem fahrzeugfesten Verdeckklappenlager angelenkt.

Einer der Lenker weist eine Verriegelungsausnehmung auf, in die ein Verriegelungselement verriegelnd einfahrbar ist, das durch einen Magneten angetrieben wird. Die Verdeckklappe ist in eine Beladestellung zu versetzen und wird in dieser durch Eingriff des Verriegelungselements in die Verriegelungsausnehmung gehalten.

Die Stellbewegung des Verriegelungselements wird mithilfe des Magneten erzeugt, also mithilfe eines Aktuators, dem eine eigene Energieversorgung und eine Steuerungseinrichtung zugeordnet sein muss, wobei die Steuerungseinrichtung den aktuellen Bewegungszustand der Kinematik von Fahrzeugverdeck und Heckdeckel berücksichtigen muss. Es handelt sich um eine verhältnismäßig aufwändige und komplexe Steuerung der Bewegung des Verriegelungselements.

Der Erfindung liegt die Aufgabe zugrunde, ein Fahrzeug mit abklappbarem Fahrzeugdach anzugeben, das sich durch eine erhöhte Sicherheit gegen unerwünschte Schwingungen bei geöffnetem Heckdeckel auszeichnet. Der Kofferraum soll zweckmäßig leicht und sicher zu beladen sein.

Diese Aufgabe wird erfindungsgemäß mit den Merkmalen des Anspruches 1 gelöst. Die Unteransprüche geben zweckmäßige Weiterbildungen an.

Erfindungsgemäß ist eine Arretiereinrichtung vorgesehen, über die die Anhebebewegung des Heckdeckelrahmens in einer Zwischenposition begrenzt wird, die zwischen der abgelegten Position des Heckdeckelrahmens und der maximal möglichen angehobenen Position des Heckdeckelrahmens liegt. Die Arretiereinrichtung bewirkt, dass der Heckdeckelrahmen über die Zwischenposition hinausgehend nicht weiter angehoben werden kann. Dies hat zur Folge, dass der Heckdeckelrahmen von der Kraft des anhebenden Stellgliedes gegen die Arretiereinrichtung gedrückt wird, wodurch der Heckdeckelrahmen einschließlich des Heckdeckels eine zusätzliche Abstützung erfährt. Der Abstützpunkt liegt auf Abstand zur Kinematikeinrichtung des Heckdeckelrahmens, über die der Heckdeckelrahmen mit der Fahrzeugkarosserie verbunden ist, so dass der Heckdeckelrahmen in Fahrzeuglängsrichtung gesehen an zumindest zwei beabstandeten Punkten gegenüber der Fahrzeugkarosserie abgestützt ist, wodurch insbesondere die Sicherheit gegenüber unerwünschten Schwingungen des Rahmens und des Heckdeckels erheblich verbessert wird.

Ein weiterer Vorteil, den Heckdeckelrahmen für die Beladung des Kofferraumes in einer Zwischenposition zu arretieren, liegt darin, dass insbesondere für den Fall, dass die Schwenkachse des Heckdeckelrahmens benachbart zur Hinterkante des Fahrzeuges liegt, das gesamte Paket, bestehend aus Rahmen und Heckdeckel, nur begrenzt in Richtung auf die am Fahrzeugheck stehende Peron zubewegt wird, was das subjektive Empfinden bei der Anhebebewegung in Richtung auf die Person zu verbessert.

Des Weiteren ist hervorzuheben, dass mit der Anhebung des Heckdeckelrahmens auch das unterhalb des Rahmens abgelegte Fahrzeugdach in eine angehobene Beladehilfsposition verstellt werden kann. Diese Beladehilfsposition ermöglicht eine leichtere Beladung des Kofferraumes, insbesondere des unterhalb des Fahrzeugdaches befindlichen, freien Raumes. Die Beladehilfsfunktion kann auch mit großen Fahrzeugdächern realisiert werden, deren Abmessung in Draufsicht gesehen größer ist als der von dem Heckdeckelrahmen begrenzte Einsatz. Auch wird mit der Anhebung des Heckdeckelrahmens Platz geschaffen für eine Anhebung beispielsweise einer Hutablage oder von Klappen, die an der Dachkinematik, der Fahrzeugkarosserie oder am Heckdeckelrahmen angeordnet sind und bei abgelegtem Dach in eine den Durchtritt der Kinematik überdeckende Position verstellt werden. Die Anhebung der Hutablage bzw. der Klappen ermöglicht das Aufstellen des abgelegten Fahrzeugdaches in die Beladehilfsposition.

Die erfindungsgemäße Ausführung lässt sich in besonders vorteilhafter Weise an einem Fahrzeug realisieren, dessen Heckdeckelrahmen um eine der Hinterkante des Fahrzeugs benachbarte Drehachse aufschwenkbar ist. Diese Aufschwenkbewegung wird von dem Heckdeckelrahmen sowohl für die Ablage- bzw. Schließbewegung des Fahrzeugdaches als auch beim Beladen des Kofferraumes für die Beladehilfsposition durchgeführt, wobei für die Ablage und Schließbewegung des Fahrzeugdaches der Heckdeckelrahmen in eine maximal angehobene Position aufgeschwenkt wird, um einen ausreichend großen Durchtritt für das Fahrzeugdach zu ermöglichen, wohingegen für das Beladen des Kofferraumes und das geringfügige Anheben des Daches in die Beladehilfsposition ein Aufschwenken des Heckdeckelrahmens in die Zwischenposition ausreicht, in der der Heckdeckelrahmen arretiert wird. In beiden Fällen führt der Heckdeckelrahmen die gleiche Aufschwenk-Grundbewegung aus.

Während für die Ablage- und Schließbewegung des Fahrzeugdaches der Heckdeckel in einer unmittelbar auf dem Heckdeckelrahmen aufliegenden Position verbleibt und gemeinsam mit diesem in die maximal angehobene Position verschwenkt wird, wird zum Beladen des Kofferraumes der Heckdeckel durch die Betätigung seiner Kinematik gegenüber dem Heckdeckelrahmen geöffnet.

In einer bevorzugten Ausführung ist vorgesehen, dass diese Öffnungsbewegung sowie die Schließbewegung des Heckdeckels gegenüber dem Heckdeckelrahmen zugleich die Stellbewegung für die Überführung der Arretiereinrichtung für den Heckdeckelrahmen zwischen Funktions- und Außerfunktionsposition darstellt. In dieser Ausführung ist die Arretiereinrichtung rein mechanisch zu betätigen, da die Überführung zwischen Funktions- und Außerfunktionsposition durch ausschließlich mechanische Maßnahmen erreicht wird. Es kommen aber auch elektrische, hydraulische oder pneumatische Mittel für die Überführung der Arretierungseinrichtung von Funktions- in Außerfunktionsposition in Betracht. Beispielsweise kann ein Sensor eingesetzt werden, der das Erreichen der Zwischenposition des Heckdeckelrahmens feststellt und ein Signal liefert, welches der Stelleinrichtung für die Steuerung des Stellantriebes für den Heckdeckelrahmen zugeführt wird.

Vorteilhaft umfasst die Arretiereinrichtung einen Sperranschlag, der zwischen der Funktions- und Außerfunktionsposition verstellbar ist, wobei in der Funktionsposition die Anhebebewegung des Heckdeckelrahmens begrenzt ist. Die Funktionsposition ist somit der Beladung des Kofferraumes und die Außerfunktionsposition der Überführung des Fahrzeugdaches zwischen Schließ- und Ablageposition zugeordnet. Zur Überführung dieses Sperranschlages in die Funktionsposition wird zweckmäßig die Relativbewegung zwischen Heckdeckel und Deckelrahmen herangezogen. Dies kann beispielsweise dadurch erfolgen, dass der Sperranschlag direkt oder indirekt über eine Feder in die Funktionsposition belastet ist und von dem Heckdeckel oder einem dem Heckdeckel zugeordneten Bauteil bei geschlossenem Heckdeckel entgegen der Federkraft in der Außerfunktionsposition gehalten wird. Mit dem Anheben des Heckdeckels relativ zum Heckdeckelrahmen kommt der Sperranschlag frei und wird durch die Kraft der auf ihn wirkenden Feder in die Funktionsposition verstellt. Sobald der Heckdeckel wieder geschlossen wird, also seine auf dem Heckdeckelrahmen ruhende Position einnimmt, drückt der Heckdeckel bzw. das mit ihm verbundene Bauteil den Sperranschlag gegen die Federkraft wieder in die Außerfunktionsposition. Hierdurch ist sichergestellt, dass der Sperranschlag bei der Überführungsbewegung des Fahrzeugdaches zwischen Schließ- und Ablageposition in der Außerfunktionsposition bleibt und die Anhebebewegung des Heckdeckelrahmens bis zur maximal geöffneten Position nicht behindert wird.

Vorteilhaft ist der Sperranschlag am Heckdeckelrahmen angeordnet und drückt in der Funktionsposition gegen ein Gegenlager, das zweckmäßig karosseriefest angeordnet ist. Der Sperranschlag kann von einem vorteilhaft ebenfalls am Heckdeckelrahmen angeordneten, verschieblichen Schiebelenker betätigt werden, der am Heckdeckelrahmen eine Verschiebebewegung ausführt und von der Kraft einer Feder in die Außerfunktionsposition beaufschlagt ist. Dieser Schiebelenker wird von dem Heckdeckel bzw. einem Bauteil der Mehrgelenkkinematik des Heckdeckels im Schließzustand des Deckels gegen die Federkraft in die Außerfunktionsposition gedrückt. Der Schiebelenker ist unmittelbar mechanisch mit dem Sperranschlag gekoppelt, so dass die Schiebebewegung des Schiebelenkers unmittelbar in eine Bewegung des Sperranschlages für die Überführung zwischen Funktions- und Außerfunktionsposition übertragen wird.

Weitere Vorteile und zweckmäßige Ausführungen sind den weiteren Ansprüchen, der Figurenbeschreibung und den Zeichnungen zu entnehmen. Es zeigen:
- Fig. 1: ein Cabriolet-Fahrzeug in Seitenansicht mit im heckseitigen Ablageraum verstauten Fahrzeugdach, mit geschlossenem Heckdeckel,
- Fig. 2: das Fahrzeug mit geöffnetem Heckdeckel,
- Fig. 3: eine Fig. 2 entsprechende Darstellung des Fahrzeugs mit geöffnetem Heckdeckel, jedoch mit angehobenem Heckdeckelrahmen, der Träger des Heckdeckels ist,
- Fig. 4: eine Fig. 3 entsprechende Darstellung mit geöffnetem Heckdeckel und angehobenem Heckdeckelrahmen, jedoch zusätzlich mit den abgelegten Fahrzeugdachteilen in angehobener Beladehilfsposition,
- Fig. 5: eine perspektivische Ansicht des Heckdeckelrahmens und der Mehrgelenkkinematik zwischen Heckdeckel und Heckdeckelrahmen, wobei die Mehrgelenkkinematik in ausgefahrener Position dargestellt ist, in der der Heckdeckel angehoben ist,
- Fig. 6: die Mehrgelenkkinematik für den Heckdeckel in eingefahrener Position,
- Fig. 7: eine vergrößerte Darstellung von Heckdeckelrahmen und Mehrgelenkkinematik des Heckdeckels, mit einem Schiebelenker am Heckdeckelrahmen, der der Arretiereinrichtung zugeordnet ist, über die der Heckdeckelrahmen in einer angehobenen Zwischenposition während des Beladens des Kofferraumes zu arretieren ist,
- Fig. 8: eine Fig. 7 entsprechende Darstellung, jedoch mit der Mehrgelenkkinematik des Heckdeckels in eingeklappter Position,
- Fig. 9: eine vergrößerte Darstellung der Arretiereinrichtung, dargestellt in der Funktionsposition, in welcher ein Sperranschlag der Arretiereinrichtung an einem karosseriefesten Gegenlager abgestützt ist,
- Fig. 10: eine Fig. 9 entsprechende Darstellung, jedoch mit dem Sperranschlag in Außerfunktionsposition.

In den Figuren sind gleiche Bauteile mit gleichen Bezugszeichen versehen.

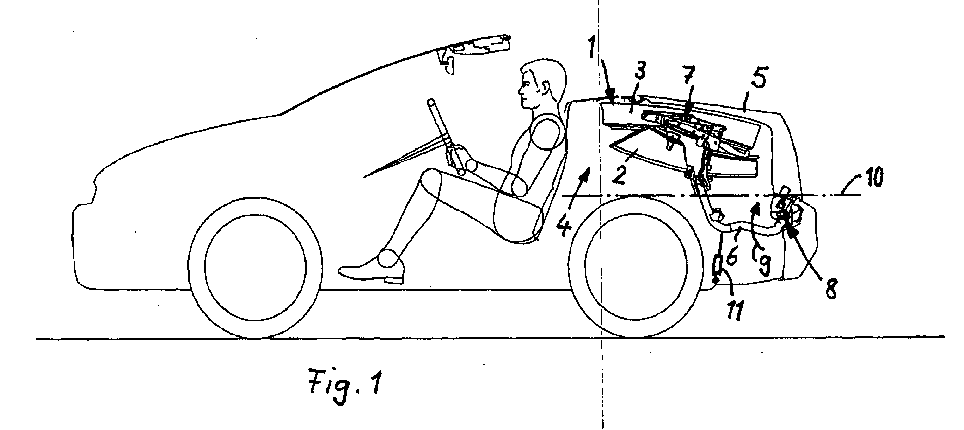

Das in Fig. 1 dargestellte Cabriolet-Fahrzeug ist mit einem abklappbaren Fahrzeugdach 1 versehen, das als zweiteiliges Hardtop-Fahrzeugdach mit einem vorderen Dachteil 2 und einem hinteren Dachteil 3 ausgebildet ist. Das Fahrzeugdach ist zwischen einer den Fahrzeuginnenraum überdeckenden Schließposition und der in Fig. 1 dargestellten Ablageposition zu verstellen, in der die Dachteile 2 und 3 ein übereinander liegendes, im heckseitigen Verdeckablageraum 4 verstautes Dachteilpaket bilden. Der Verdeckablageraum 4 ist Bestandteil des Kofferraumes des Fahrzeuges. Überdeckt ist der Verdeckablageraum 4 von einem Heckdeckel 5, der über eine Mehrgelenkkinematik 7, die insbesondere als Siebengelenkkinematik ausgebildet ist, relativbeweglich an einem Heckdeckelrahmen 6 gehalten ist. Dieser Heckdeckelrahmen 6 ist über eine heckseitige Schwenkachse 8 verschwenkbar an die Fahrzeugkarosserie gekoppelt und kann in Pfeilrichtung 9 aufgeschwenkt werden. Bei geschlossenem Heckdeckel 5 ist die Mehrgelenkkinematik 7 eingeklappt, Heckdeckel 5 und Heckdeckelrahmen 6 befinden sich in einer angenäherten Position. Zum Aufschwenken des Heckdeckelrahmens 6, der insbesondere als Rohrrahmen ausgebildet ist, in Pfeilrichtung 9 ist ein an der Fahrzeugkarosserie abgestütztes Stellglied 11 vorgesehen. Die Aufschwenkbewegung in Pfeilrichtung 9 vollführt der Heckdeckelrahmen 6 einschließlich des darauf angeordneten Heckdeckels 5 zum einen bei der Überführungsbewegung des Fahrzeugdaches 1 zwischen Schließ- und Ablageposition und zum anderen zum Öffnen und Beladen des Kofferraumes 4.

Eingezeichnet ist den Fig. 1 bis 4 auch eine horizontale Referenzlinie 10 in Höhe des Kontaktes zwischen hinterer Heckdeckelkante des Heckdeckels 5 und Fahrzeugkarosserie. Die Referenzlinie 10 soll die Anhebebewegung des Heckdeckelrahmens 6 sowie des Fahrzeugdaches 1 zum Erreichen einer Beladehilfsposition verdeutlichen.

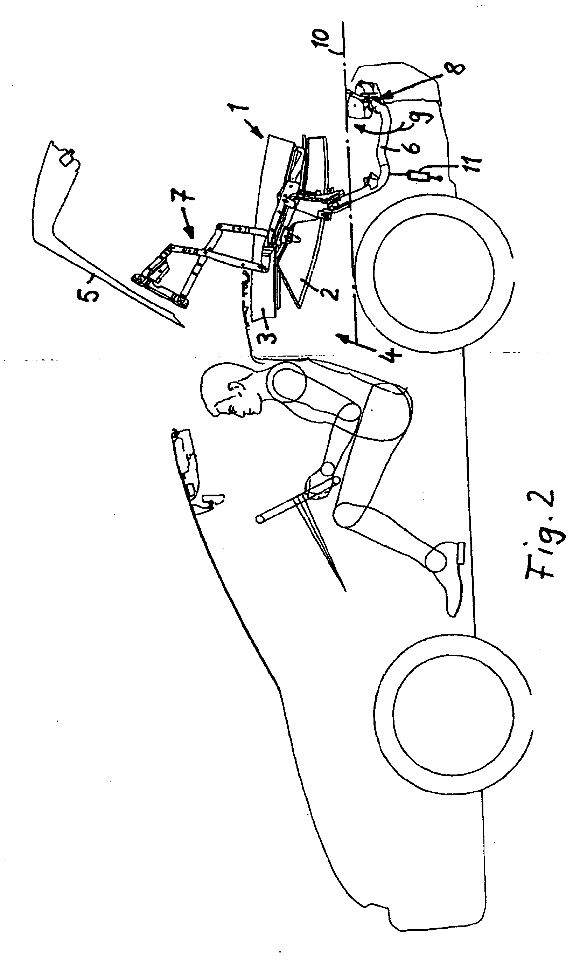

In Fig. 2 ist der Heckdeckel 5 in seiner aufgeklappten Position gezeigt, in welcher die Hinterkante des Heckdeckels angehoben ist. Erreicht wird dies durch eine Betätigung bzw. ein Ausfahren der Mehrgelenkkinematik 7, über die der Heckdeckel 5 an den Heckdeckelrahmen 6 gekoppelt ist. Sowohl der Heckdeckelrahmen 6 als auch das abgelegte Dachteilpaket mit den Dachteilen 2 und 3 verbleibt zunächst noch in der abgesenkten Ablageposition.

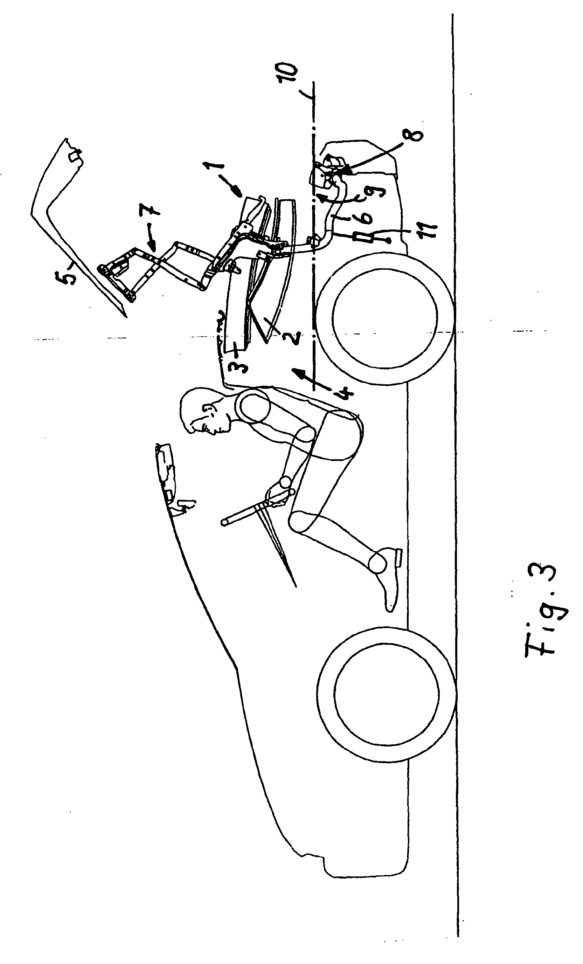

In Fig. 3 ist der Heckdeckelrahmen 6 in Pfeilrichtung 9 durch Betätigung des Stellgliedes 11 bis in eine angehobene Zwischenposition aufgestellt worden, was anhand eines Vergleiches mit der Referenzlinie 10 zu erkennen ist. Der Heckdeckel 5 ist nach wie vor relativ zum Heckdeckelrahmen 6 angehoben, verändert jedoch aufgrund des Aufschwenkens des Heckdeckelrahmens 6 gegenüber der Fahrzeugkarosserie geringfügig seine Position. Das Fahrzeugdach mit den Dachteilen 2 und 3 verbleibt noch in der abgesenkten Position im Ablageraum 4.

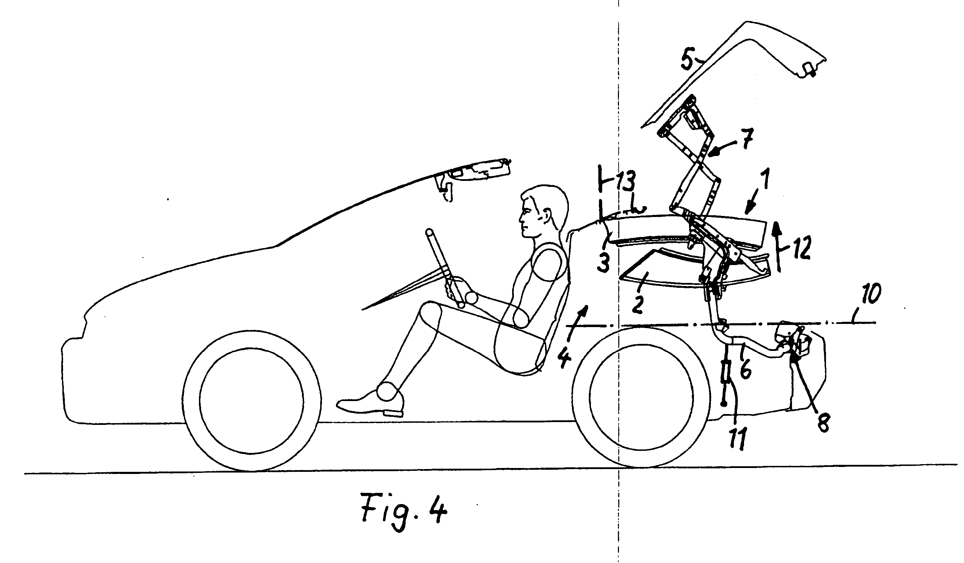

In Fig. 4 befinden sich der Heckdeckelrahmen 6 und der Heckdeckel 5 in der gleichen Position wie in Fig. 3, allerdings ist nunmehr das Dachteilpaket mit den Dachteilen 2 und 3 wie mit Pfeilrichtung 12 angedeutet, innerhalb des Ablageraumes 4 in eine angehobene Beladehilfsposition angehoben worden. Erreicht wird dies durch Betätigung der Dachkinematik. In der angehobenen Beladehilfsposition ist das Be- und Entladen des Kofferraumes erleichtert. Die angehobene Beladehilfsposition kann kollisionsfrei erreicht werden, da diejenigen Abschnitte des Heckdeckelrahmens 6, die in Ablageposition oberhalb des Fahrzeugesdaches 1 liegen, ebenfalls angehoben sind. Die angehobene Zwischenposition des Heckdeckelrahmens 6 erlaubt das Erreichen der Beladehilfsposition des Fahrzeugdaches 1.

Die Anhebung des Fahrzeugdaches 1 in die Beladehilfsposition kann zudem dadurch erleichtert werden, dass eine Hutablage 13, die bei vollständig abgesenktem Fahrzeugdach oberhalb des abgelegten Dachteilpaketes liegt, in die strichlierte Position aufgestellt wird.

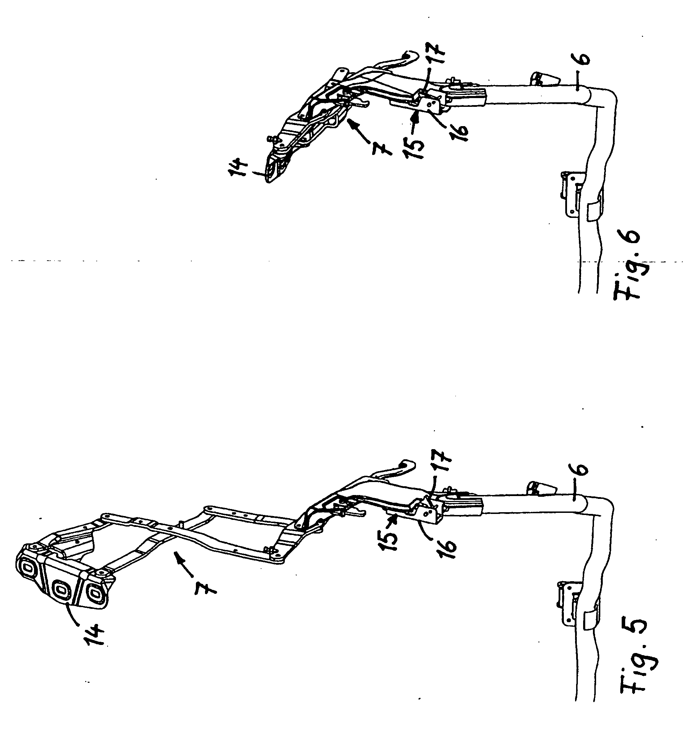

In den Fig. 5 und 6 sind der Heckdeckelrahmen 6 und die Mehrgelenkkinematik 7 in Einzeldarstellung gezeigt. Die Mehrgelenkkinematik 7 ist als Siebengelenkkinematik ausgeführt und umfasst fünf Einzellenker sowie eine Tragplatte 14, an der der Heckdeckel befestigt wird. Am Heckdeckelrahmen 6 befindet sich eine Arretiereinrichtung 15, die den Zweck hat, den Heckdeckelrahmen 6 in der angehobenen Zwischenposition zu stabilisieren. Die Arretiereinrichtung 15 umfasst einen Schiebelenker 16 und einen Sperranschlag 17, die beide am Heckdeckelrahmen 6 gehalten sind, jedoch gegenüber dem Heckdeckelrahmen eine Relativbewegung ausführen können. Der Schiebelenker 16 ist verschieblich am Heckdeckelrahmen 6 gelagert, der Sperranschlag 17 ist schwenkbar am Heckdeckelrahmen gelagert. Der Schiebelenker 16 und der Sperranschlag 17 wirken in der Weise zusammen, dass eine Verschiebebewegung des Schiebelenkers 16 in eine Schwenkbewegung des Sperranschlages 17 umgesetzt wird. Der Schiebelenker 16 ist von einem auf ihn wirkenden Federelement in die so genannte Funktionsposition federbelastet, in welcher der Sperranschlag 17 die in Fig. 5 dargestellte, nach außen geschwenkte Position einnimmt. Diese Funktionsposition nimmt die Arretiereinrichtung 15 automatisch ein, wenn die Mehrgelenkkinematik 7 des Heckdeckels die in Fig. 5 dargestellte ausgefahrene Stellung einnimmt. In diesem Fall kann der Schiebelenker 16 unter der Wirkung des Federelementes nach oben ausfahren und hierbei den Sperranschlag 17 in die nach außen verschwenkte Position gemäß Fig. 5 verstellen. Die Funktionsposition nimmt die Arretiereinrichtung mit dem Erreichen der Zwischenstellung des Heckdeckelrahmens 6 ein.

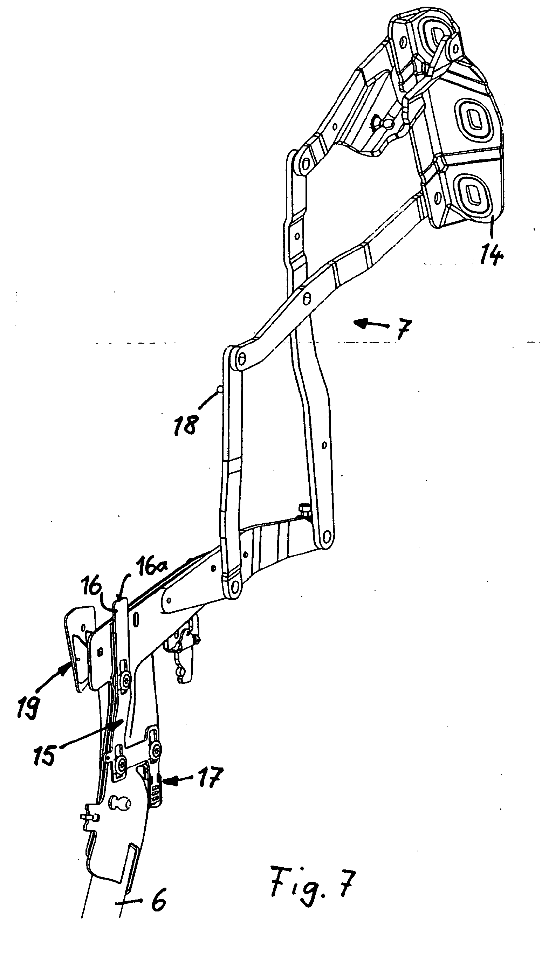

In der in Fig. 6 dargestellten Position ist die Mehrgelenkkinematik 7 des Heckdeckels in der eingeklappten Position gezeigt. Ein Bauteil der Mehrgelenkkinematik - im Einzelnen dargestellt in Fig. 7 - beaufschlagt in der eingeklappten Position die obere Kante des Schiebelenkers 16 und drückt diesen gegen die Kraft der auf ihn wirkenden Feder nach unten, was der Außerfunktionsposition entspricht. In dieser Außerfunktionsposition ist der mit dem Schiebelenker 16 zusammenwirkende Sperranschlag 17 in die eingeschwenkte Position verstellt, in der der Sperranschlag nicht nach außen übersteht.

Der vergrößerten Darstellung gemäß Fig. 7 ist die Form des Schiebelenkers 16 der Arretiereinrichtung 15 zu entnehmen. Der Schiebelenker 16 weist zwei parallele und zueinander versetzt angeordnete Abschnitte auf, die über ein Verbindungsstück miteinander verbunden sind. Der Schiebelenker 16 ist an insgesamt drei Stellen mit Langlöchern versehen und in diesen Langlöchern längsverschieblich am Heckdeckelrahmen 6 gehalten. Ein unterer Abschnitt am Schiebelenker 16 wirkt mit dem Sperranschlag 17 zusammen, wobei eine Längsverschiebung des Schiebelenkers 16 eine Schwenkbewegung des Sperranschlages 17 erzeugt.

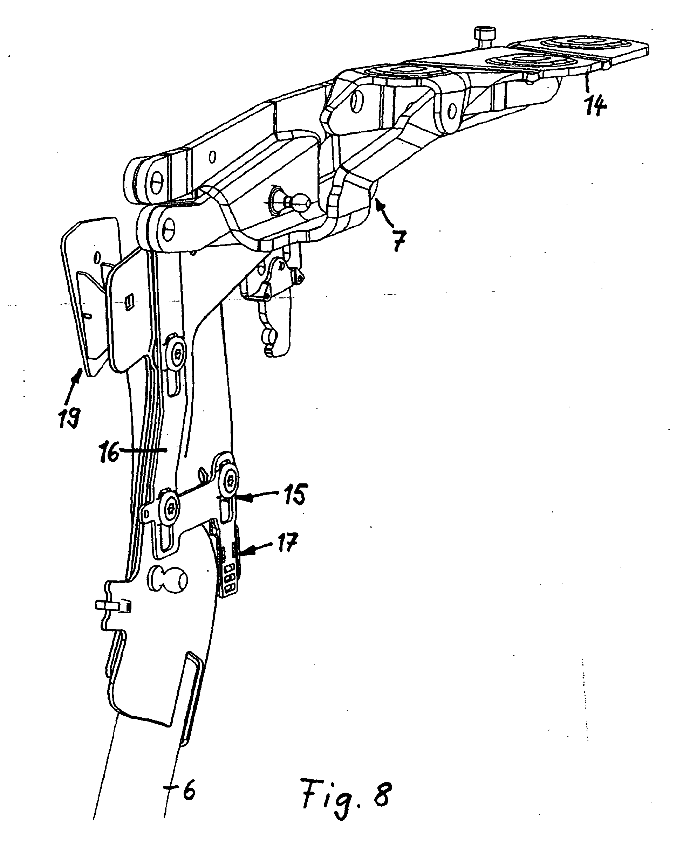

An einem Lenker der Mehrgelenkkinematik 7 befindet sich ein Betätigungsbolzen 18, der bei eingeklappter Mehrgelenkkinematik 7 auf die Oberkante 16a des Schiebelenkers 16 drückt und diesen entgegen der Kraft der Feder aus der in Fig. 7 gezeigten Funktionsposition nach unten in die Außerfunktionsposition beaufschlagt, in der auch der Sperranschlag 17 wieder eingeklappt ist. Diese Situation ist in Fig. 8 dargestellt.

In den Fig. 7 und 8 ist ein Gegenlager 19 eingetragen, welches karosseriefest gehalten ist und gegen das der ausgeschwenkte, in Funktionsposition stehende Sperranschlag 17 bei einer Anhebung des Heckdeckelrahmens 6 gefahren wird. Sobald der Sperranschlag 17 in Anlage mit dem Gegenlager 19 gelangt, ist die weitere Aufschwenkbewegung des Heckdeckelrahmens 6 blockiert. Das auf den Heckdeckelrahmen wirkende Stellelement drückt den Heckdeckelrahmen von unten gegen das Gegenlager 19, wodurch der Heckdeckelrahmen und auch der vom Heckdeckelrahmen getragene Heckdeckel stabilisiert werden.

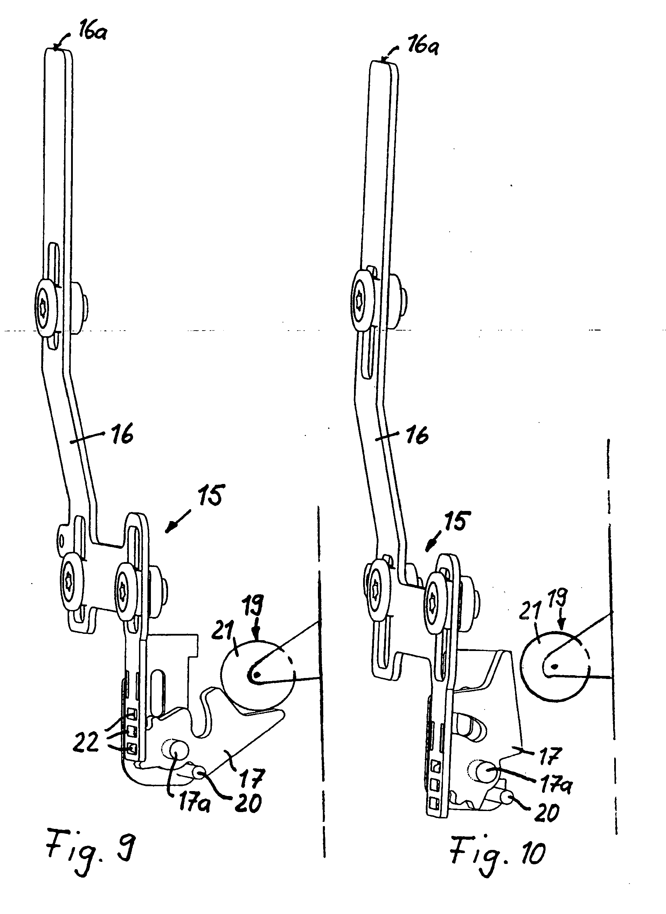

In den Fig. 9 und 10 ist die Arretiereinrichtung 15 in vergrößerter Darstellung gezeigt. In Fig. 9 befindet sich die Arretiereinrichtung 15 in der Funktionsposition, in der der Sperranschlag 17 um eine Schwenkachse 17a, über die der Sperranschlag am Heckdeckelrahmen gelagert ist, nach außen verschwenkt ist. In der nach außen verschwenkten Funktionsposition gelangt der Sperranschlag 17 in Anschlagstellung zum karosseriefesten Gegenlager 19, das eine Rolle 21 umfasst. Diese Anschlagstellung entspricht der Zwischenposition des Heckdeckelrahmens, die in den Fig. 3 und 4 gezeigt ist. Über diese Zwischenposition hinaus kann der Heckdeckelrahmen nicht weiter angehoben werden.

An einem fest mit dem Heckdeckelrahmen 6 verbundenen Bauteil befindet sich ein Sperrbolzen 20, der die Ausschwenkbewegung des Sperranschlages 17 begrenzt.

In den unteren Abschnitt des Schiebelenkers 16 sind mehrere, hintereinander angeordnete Ausnehmungen 22 eingebracht, die mit korrespondierenden Zähnen am Sperranschlag 17 kämmen, wodurch die translatorische Schiebebewegung des Schiebelenkers 16 in eine rotatorische Schwenkbewegung des Sperranschlages 17 übertragen wird.

### Bezugszeichenliste

- 1: Fahrzeugdach
- 2: vorderes Dachteil
- 3: hinteres Dachteil
- 4: Verdeckablageraum
- 5: Heckdeckel
- 6: Heckdeckelrahmen
- 7: Mehrgelenkkinematik
- 8: Schwenkachse
- 9: Pfeilrichtung
- 10: Referenzlinie
- 11: Stellglied
- 12: Pfeilrichtung
- 13: Hutablage
- 14: Tragplatte
- 15: Arretiereinrichtung
- 16: Schiebelenker
- 16a: Oberkante
- 17: Sperranschlag
- 17a: Schwenkachse
- 18: Betätigungsbolzen
- 19: Gegenlager
- 20: Sperrbolzen
- 21: Rolle
- 22: Ausnehmung

## Patentansprüche

1. Fahrzeug mit einem zwischen einer Schließposition und einer Ablageposition verstellbaren Fahrzeugdach (1), das in Ablageposition in einem heckseitigen Verdeckablageraum (4) verstaut ist, welcher von einem Heckdeckel (5) zu verschließen ist, der an einem verstellbar an die Karosserie angeschlagenen Heckdeckelrahmen (6) gehalten ist, wobei zum Beladen des Kofferraumes in Ablageposition des Fahrzeugdaches (1) die dem Heckbereich des Fahrzeuges benachbarte Hinterkante des Heckdeckels (5) einschließlich Heckdeckelrahmen (6) anhebbar und das verstaute Fahrzeugdach (1) in eine angehobene Beladehilfsposition verstellbar ist, wobei eine Arretierreinrichtung (15) zur Begrenzung der Anhebebewegung des Heckdeckelrahmens (6) in einer Zwischenposition zwischen abgelegter Position des Heckdeckelrahmens (6) im Verdeckablageraum (4) und maximal angehobener Position vorgesehen ist,
**dadurch gekennzeichnet,**
**dass** die Arretierreinrichtung (15) einen Sperranschlag (17) umfasst, wobei der Sperranschlag (17) zwischen einer der Begrenzung der Anhebebewegung des Heckdeckelrahmens (6) entsprechenden Funktionsposition und einer Außerfunktionsposition verstellbar ist, und dass die Heckdeckelbewegung zugleich die Stellbewegung zur Überführung des Sperranschlags (17) von der Funktions- in die Außerfunktionsposition ist.

2. Fahrzeug nach Anspruch 1,
**dadurch gekennzeichnet,**
**dass** der Sperranschlag (17) verstellbar am Heckdeckelrahmen (6) gehalten ist.

3. Fahrzeug nach Anspruch 2,
**dadurch gekennzeichnet,**
**dass** der Sperranschlag (17) schwenkbar am Heckdeckelrahmen (6) gehalten ist.

4. Fahrzeug nach einem der Ansprüche 1 bis 3,
**dadurch gekennzeichnet,**
**dass** der Sperranschlag (17) in seine Funktionsposition federbelastet ist und bei geschlossenem Heckdeckel (5) von diesem gegen die Federkraft in die Außerfunktionsposition beaufschlagt ist.

5. Fahrzeug nach einem der Ansprüche 1 bis 4,
**dadurch gekennzeichnet,**
**dass** der Sperranschlag (17) von einem Schiebelenker (16) zwischen Funktions- und Außerfunktionsposition zu verstellen ist, wobei der Schiebelenker (16) in Außerfunktionsposition von dem Heckdeckel (5) bzw. einer Mehrgelenkkinematik (7) des Heckdeckels (5) beaufschlagt ist.

6. Fahrzeug nach Anspruch 5,
**dadurch gekennzeichnet,**
**dass** der Schiebelenker (16) verschiebbar am Heckdeckelrahmen (6) gehalten ist.

7. Fahrzeug nach Anspruch 5 oder 6,
**dadurch gekennzeichnet,**
**dass** der Schiebelenker (16) von einem Federelement beaufschlagt ist.

8. Fahrzeug nach einem der Ansprüche 1 bis 7,
**dadurch gekennzeichnet,**
**dass** der Sperranschlag (17) in der Zwischenposition des Heckdeckelrahmens (6) an einem karosseriefesten Gegenlager (19) abgestützt ist.

9. Fahrzeug nach Anspruch 8,
**dadurch gekennzeichnet,**
**dass** der Heckdeckelrahmen (6) von einem Stellglied (11) in die Zwischenposition anzuheben und gegen das Gegenlager (19) beaufschlagt ist.

10. Fahrzeug nach einem der Ansprüche 1 bis 9,
**dadurch gekennzeichnet,**
**dass** die Mehrgelenkkinematik (7), über die der Heckdeckel (5) verstellbar am Heckdeckelrahmen (6) gehalten ist, als Siebengelenkkinematik ausgebildet ist.

11. Fahrzeug nach einem der Ansprüche 1 bis 10,
**dadurch gekennzeichnet,**
**dass** der Heckdeckelrahmen (6) um eine der Hinterkante des Fahrzeugs benachbarte Drehachse aufschwenkbar ist.

## Claims

1. Vehicle with a vehicle roof (1) which is adjustable between a closed position and a stored position and, in the stored position, is stowed in a rear top storage compartment (4) which can be closed by a rear cover (5) which is held on a rear cover frame (6) fastened adjustably to the vehicle body, wherein, in order to load the boot space in the stored position of the vehicle roof (1), the rear edge of the rear cover (5), including the rear cover frame (6), which rear edge is adjacent to the rear region of the vehicle, can be raised and the stowed vehicle roof (1) can be adjusted into a raised auxiliary loading position, and wherein a locking device (15) is provided for limiting the raising movement of the rear cover frame (6) in an intermediate position between the stored position of the rear cover frame (6) in the top storage compartment (4) and maximum raised position, **characterized in that** the locking device (15) comprises a blocking stop (17), the blocking stop (17) being adjustable between an operative position corresponding to the limiting of the raising movement of the rear cover frame (6) and an inoperative position, and **in that** the rear cover movement is at the same time the adjusting movement for transferring the blocking stop (17) from the operative into the inoperative position.

2. Vehicle according to Claim 1, **characterized in that** the blocking stop (17) is held adjustably on the rear cover frame (6).

3. Vehicle according to Claim 2, **characterized in that** the blocking stop (17) is held pivotably on the rear cover frame (6).

4. Vehicle according to one of Claims 1 to 3, **characterized in that** the blocking stop (17) is springloaded into its operative position and, when the rear cover (5) is closed, is pressed thereby counter to the spring force into the inoperative position.

5. Vehicle according to one of Claims 1 to 4, **characterized in that** the blocking stop (17) can be adjusted between the operative and inoperative position by a sliding link (16), the sliding link (16) being acted upon in the inoperative position by the rear cover (5) or by a multi-bar kinematic system (7) of the rear cover (5).

6. Vehicle according to Claim 5, **characterized in that** the sliding link (16) is held displaceably on the rear cover frame (6).

7. Vehicle according to Claim 5 or 6, **characterized in that** the sliding link (16) is acted upon by a spring element.

8. Vehicle according to one of Claims 1 to 7, **characterized in that**, in the intermediate position of the rear cover frame (6), the blocking stop (17) is supported on a counter bearing (19) fixed on the vehicle body.

9. Vehicle according to Claim 8, **characterized in that** the rear cover frame (6) can be raised into the intermediate position by an actuating element (11) and is pressed against the counter bearing (19).

10. Vehicle according to one of Claims 1 to 9, **characterized in that** the multi-bar kinematic system (7) via which the rear cover (5) is held adjustably on the rear cover frame (6) is designed as a seven-bar kinematic system.

11. Vehicle according to one of Claims 1 to 10, **characterized in that** the rear cover frame (6) can be pivoted up about an axis of rotation adjacent to the rear edge of the vehicle.

## Revendications

1. Véhicule comprenant un toit de véhicule (1) pouvant être déplacé entre une position de fermeture et une position de rangement, qui est rangé dans un espace de rangement de capote (4) du côté arrière, dans la position de rangement, lequel peut être fermé par un capot arrière (5) qui est maintenu sur un cadre de capot arrière (6) raccordé de manière coulissante à la carrosserie, le bord arrière du capot arrière (5), adjacent à la région arrière du véhicule, pouvant être soulevé conjointement avec le cadre du capot arrière (6) pour charger le coffre dans la position de rangement du toit du véhicule (1) et le toit du véhicule rangé (1) pouvant être déplacé dans une position soulevée d'aide au chargement, un dispositif de blocage (15) étant prévu pour limiter le mouvement de soulèvement du cadre du capot arrière (6) dans une position intermédiaire entre la position rangée du cadre du capot arrière (6) dans l'espace de rangement de capote (4) et la position soulevée au maximum,
**caractérisé en ce que**
le dispositif de blocage (15) comprend une butée de blocage (17), la butée de blocage (17) pouvant être déplacée entre une position fonctionnelle correspondant à la limitation du mouvement de soulèvement du cadre du capot arrière (6) et une position non fonctionnelle, et **en ce que** le déplacement du capot arrière est en même temps le mouvement de réglage pour le transfert de la butée de blocage (17) de la position fonctionnelle dans la position non fonctionnelle.

2. Véhicule selon la revendication 1,
**caractérisé en ce que**
la butée de blocage (17) est maintenue de manière coulissante sur le cadre du capot arrière (6).

3. Véhicule selon la revendication 2,
**caractérisé en ce que**
la butée de blocage (17) est maintenue de manière pivotante sur le cadre du capot arrière (6).

4. Véhicule selon l'une quelconque des revendications 1 à 3,
**caractérisé en ce que**
la butée de blocage (17) est sollicitée par ressort dans sa position fonctionnelle et, lorsque le capot arrière (5) est fermé, est sollicitée par celui-ci à l'encontre de la force de ressort dans la position non fonctionnelle.

5. Véhicule selon l'une quelconque des revendications 1 à 4,
**caractérisé en ce que**
la butée de blocage (17) peut être déplacée par un bras coulissant (16) entre la position fonctionnelle et la position non fonctionnelle, le bras coulissant (16) étant sollicité dans la position non fonctionnelle par le capot arrière (5) ou par une cinématique à articulations multiples (7) du capot arrière (5).

6. Véhicule selon la revendication 5,
**caractérisé en ce que**
le bras coulissant (16) est maintenu de manière déplaçable sur le cadre du capot arrière (6).

7. Véhicule selon la revendication 5 ou 6,
**caractérisé en ce que**
le bras coulissant (16) est sollicité par un élément de ressort.

8. Véhicule selon l'une quelconque des revendications 1 à 7,
**caractérisé en ce que**
la butée de blocage (17) est supportée dans la position intermédiaire du cadre de capot arrière (6) sur un palier de butée (19) fixé à la carrosserie.

9. Véhicule selon la revendication 8,
**caractérisé en ce que**
le cadre de capot arrière (6) peut être soulevé par un actionneur (11) dans la position intermédiaire et est sollicité contre le palier de butée (19).

10. Véhicule selon l'une quelconque des revendications 1 à 9,
**caractérisé en ce que**
la cinématique à articulations multiples (7), par le biais de laquelle le capot arrière (5) est maintenu de manière coulissante sur le cadre du capot arrière (6), est réalisée sous forme de cinématique à sept articulations.

11. Véhicule selon l'une quelconque des revendications 1 à 10,
**caractérisé en ce que**
le cadre du capot arrière (6) peut se redresser par pivotement autour d'un axe de rotation adjacent au bord arrière du véhicule.
